(19) Europäisches Patentamt
European Patent Office
Office européen des brevets

(11) Veröffentlichungsnummer: **0 038 466**
**B1**

(12) # EUROPÄISCHE PATENTSCHRIFT

(45) Veröffentlichungstag der Patentschrift: **22.06.83**

(51) Int. Cl.³: **C 07 F 9/40**, C 07 F 9/38

(21) Anmeldenummer: **81102610.3**

(22) Anmeldetag: **07.04.81**

(54) **Verfahren zur Herstellung von Vinylphosphonsäurederivaten.**

(30) Priorität: **17.04.80 DE 3014737**

(43) Veröffentlichungstag der Anmeldung: **28.10.81 Patentblatt 81/43**

(45) Bekanntmachung des Hinweises auf die Patenterteilung: **22.06.83 Patentblatt 83/25**

(84) Benannte Vertragsstaaten: **BE DE FR GB NL**

(56) Entgegenhaltungen:
**DE A 1 668 188**
**DE A 1 900 858**
**DE C 1 006 414**
**US A 3 064 030**
**US A 3 694 527**

(73) Patentinhaber: **HOECHST AKTIENGESELLSCHAFT**
**Postfach 80 03 20**
**D-6230 Frankfurt/Main 80 (DE)**

(72) Erfinder: **Kleiner, Hans-Jerg, Dr.**
**Altkönigstrasse 11a**
**D-6242 Kronberg/Taunus (DE)**

**EP 0 038 466 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Vinylphosphonsäurederivaten

Vinylphosphonsäurediester können bekanntlich aus 2-Halogenäthan-phosphonsäurediestern durch Abspaltung von Halogenwasserstoff mit Basen hergestellt werden (US-A-3 064 030). Nachteilig bei diesem Verfahren ist die Tatsache, daß hier zur Abspaltung des Halogenwasserstoffs mindestens äquimolare Mengen einer Base benötigt werden, wodurch entsprechend unerwünschte große Mengen an Salz anfallen, die abgetrennt und beseitigt werden müssen. Erwünscht ist daher ein einfaches Verfahren, aus 2-Halogenäthanphosphonsäurediestern Vinylphosphonsäurederivate herzustellen.

Es wurde nun überraschenderweise gefunden, daß man auf einfache und wirtschaftliche Weise Vinylphosphonsäurederivate der allgemeinen Formel

$$R_1O(-\overset{\displaystyle O}{\overset{\|}{\underset{\underset{\displaystyle CH=CH_2}{|}}{P}}}-O-)_nR_1,$$

worin $R_1$ Wasserstoff oder Alkylgruppen mit 1 bis 4, bevorzugt 1 bis 2 Kohlenstoffatomen bedeutet und n 1 oder 2 ist, herstellen kann, indem man 2-Halogenäthanphosphonsäuredialkylester der allgemeinen Formel

$$XCH_2CH_2\overset{\displaystyle O}{\overset{\|}{P}}(OR_2)_2,$$

worin X Chlor oder Brom bedeutet und $R_2$ Alkylgruppen mit 1 bis 4, bevorzugt 1 bis 2 Kohlenstoffatomen bedeutet, auf 150-220 °C, vorzugsweise 170-200 °C erhitzt, wobei Alkylhalogenid der allgemeinen Formel

$$XR_2$$

worin X und $R_2$ die oben angegebene Bedeutung besitzen, abspaltet. Die Umsetzung kann gegebenenfalls in Gegenwart saurer oder basischer Katalysatoren durchgeführt werden. 2-Halogenäthanphosphonsäuredialkylester können nach verschiedenen bekannten Verfahren, z. B. durch Umsetzung von 2-Halogenäthanphosphonsäuredihalogeniden mit Alkoholen in Gegenwart von Basen, hergestellt werden. Bevorzugt können 2-Chloräthanphosphonsäuredialkylester gemäß DE-PS 1 618 383 durch radikalisch katalysierte Anlagerung von Vinylchlorid an Dialkylphosphite gewonnen werden. Als Ausgangsmaterialien kommen somit z. B. in Frage 2-Chloräthanphosphonsäuredimethyl-, diäthyl-, diisopropyl- und di-n-butylester; 2-Bromäthanphosphonsäuredimethyl- und diäthylester. Besonders bevorzugt sind der 2-Chloräthanphosphonsäuredimethyl- und diäthylester.

Als saure oder basische Katalysatoren kommen zahlreiche Verbindungen in Frage. Als saure Katalysatoren lassen sich verwenden:

A. Schwefelsäure oder Phosphorsäure.

B. Halogenhaltige Carbonsäuren mit einem $P_{Ka}$-Wert < 2,5 wie Dichloressigsäure, Trichloressigsäure, Trifluoressigsäure.

C. Aromatische Sulfonsäuren mit einem $P_{Ka}$-Wert < 2,5 wie Benzolsulfonsäure, p-Toluolsulfonsäure.

D. Bevorzugt Phosphinsäuren mit 2 bis 18 Kohlenstoffatomen wie Dimethylphosphinsäure, Methyläthylphosphinsäure, Dioktylphosphinsäure, Methylphenylphosphinsäure, Diphenylphosphinsäure.

E. Besonders bevorzugt Phosphonsäuren mit 1 bis 18 Kohlenstoffatomen und deren Halbester mit 1 bis 4 Kohlenstoffatomen im Alkoholrest wie Methanphosphonsäure, Propanphosphonsäure, Propanphosphonsäuremonomethylester, Oktadekanphosphonsäure, 2-Chloräthanphosphonsäure, 2-Chloräthanphosphonsäuremonoethylester, Vinylphosphonsäure, Vinylphosphonsäuremonomethylester, Vinylphosphonsäuremonoäthylester, Benzolphosphonsäure.

F. Ebenfalls besonders bevorzugt Pyrophosphonsäuren oder deren Halbester wie Methanpyrophosphonsäure, Benzolpyrophosphonsäure, Vinylpyrophosphonsäure, Vinylpyrophosphonsäuremonomethylester.

G. Sehr geeignet sind auch die sauren Reaktionsgemische, die bei dem erfindungsgemäßen Verfahren entstehen.

Als basische Katalysatoren lassen sich verwenden:

A. Tertiäre aliphatische und aromatische Amine und Phosphine mit 3 bis 18 Kohlenstoffatomen wie Trimethylamin, Tripropylamin, Tributylamin, Triphenylamin, Trimethylphosphin, Triäthylphosphin, Tripropylphosphin, Tributylphosphin, Triphenylphosphin und Tris-(p-dimethylaminophenyl)-phosphin und die entsprechenden gemischten Amine, Phosphine, Phospholane und Phospholene wie Dimethyläthylamin,

Diäthylbutylamin, N-Dimethylanilin, 4-Methyl-N-dimethylanilin, N-Diäthylanilin, N,N-Tetramethylphenyldiamin oder N-Methylpyrrolidin ; Methyldiäthylphosphin, Dimethylpropylphosphin, Diäthylbenzylphosphin, 1-Methylphospholen-3 und 1-Äthyl-3-methylphospholen-3.

B. Quartiäre Ammoniumsalze bzw. Phosphoniumsalze mit 3 bis 18 Kohlenstoffatomen wie Tetramethylammoniumchlorid oder -bromid, Tetraäthylphosphoniumchlorid, Trimethylbenzylammoniumchlorid, Triäthylbenzylammoniumchlorid, Triäthylbenzylammoniumbromid, Trimethylbenzylphosphoniumchlorid, Triphenyläthylphosphonium-2,4-diaminobenzosulfonat.

C. Heterocyclische Verbindungen mit aromatischem Charakter wie Pyridin, 4-(Dimethylamino)-pyridin, Chinolin, ihre verschiedenen Alkyl- und Dialkyl-, vorzugsweise Methyl-, bzw. Dimethyl-derivate, Imidazol, N-Vinylimidazol, Benzthiazol, 2-Amino-6-äthoxy-benzthiazol, ferner Phosphabenzole.

D. Säureamide wie Dimethylformamid, Diäthylformamid, N-Dimethylacetamid, N-Diäthylpropionamid, N-Dimethylbenzamid, N-Methyl-pyrrolidon, N,N'-Tetramethylterephthalsäurediamid oder Harnstoffe wie Tetramethylharnstoff und Trimethylphenylharnstoff.

E. Sonstige Stickstoff- oder Phosphorverbindungen mit einer höheren Wertigkeit eines N- oder P-Atoms als 3 wie Pyridin-N-oxid, Trimethylphosphinoxid, Tributylphosphinoxid, Trihexylphosphinoxid, Triphenylphosphinoxid, Trihexylphosphinoxid, Trimethylphosphinoxid, Dimethylphenylphosphinoxid, Dimethylphenylphosphinsulfid, Dimethylchlormethylphosphinoxid, Dimethyleikosylphosphinoxid, Dimethyldodecylphosphinoxid, Dimethylphosphinoxid, Dimethylpyrrolidinyl-1-methylphosphinoxid, Triphenylphosphinoxid-dichlorid, Dimethyldodecylphosphinsulfid, Triphenylphosphinimin, Dimethylchlormethylphosphindichlorid, N-2-Dimethylphosphinyläthyl-methyl-acetamid, N-2-Dimethylphosphinyl-äthyl-methyl-amin, Phospholenoxid wie 1-Methylphospholen-1-oxid und 1-Äthyl-3-methyl-phospholen-1-oxid.

F. Amide der phosphinigen und phosphonigen Säure und der Phosphin- und Phosphonsäuren sowie ihrer Thioanaloga, wie Äthanphosphonsäure-bis-diäthylamid, Methan-butanphosphinigsäure-dimethylamid, Diäthylphosphinigsäureisobutylamid. Ferner Triamide der Phosphor- und der Thiophosphorsäure wie Hexamethylphosphorsäuretrisamid.

Die Katalysatoren werden in Mengen von 0,01 bis 10, bevorzugt 0,1 bis 5 Gew.-% eingesetzt. Bei Verwendung kurzkettiger Alkanphosphonsäuren mit bis zu 4 Kohlenstoffatomen, deren Monoalkylestern oder der bereits gewonnenen sauren Reaktionsgemische können auch größere Mengen von 10 bis 50 Gew.-% eingesetzt werden, da die bei dieser Arbeitsweise anfallenden Gemische an Vinyl- und Alkanphosphonsäurederivaten für sich interessante Zwischenprodukte darstellen können.

Das Verfahren wird im allgemeinen so durchgeführt, daß das Ausgangsprodukt auf 190-195 °C erhitzt wird. Das sich abspaltende Alkylhalogenid destilliert dann zusammen mit geringen Mengen Dialkyläther ab. Die Destillation erfolgt unter Normaldruck, gegebenenfalls unter Zuhilfenahme eines Inertgases wie z. B. Stickstoff. Es kann im Einzelfall vorteilhaft sein, im Vakuum abzudestillieren. Die Abspaltung des Alkylhalogenids ist nach 4 bis etwa 20 Stunden beendet. Es kann zweckmäßig sein, danach noch mehrere Stunden bei der Reaktionstemperatur nachzurühren.

Bei dem Einsatz der Katalysatoren wird zweckmäßig ein Temperaturbereich von 165-175 °C gewählt, da in diesem Fall die Abspaltung der Alkylhalogenide bereits bei tieferen Temperaturen erfolgt. Es kann auch zweckmäßig sein, die Reaktion bei 190-195 °C zu beginnen. Wenn sich dann das saure Reaktionsprodukt, das ja ebenfalls als Katalysator für die Reaktion wirkt, in genügendem Ausmaß gebildet hat, kann man das Verfahren bei tieferen Temperaturen, beispielsweise 170 °C, weiterführen. Das Verfahren wird daher im Temperaturbereich 150-220 °C durchgeführt. Höhere Temperaturen sind möglich, bringen aber keinen Vorteil. Es besteht dann die Gefahr der verstärkten Bildung von Nebenprodukten, aber auch der Polymerisation. Das Verfahren kann auch kontinuierlich gestaltet werden.

Es kann vorteilhaft sein, Polymerisationsinhibitoren, wie z. B. Hydrochinon, Hydrochinonmonomethyläther oder Phenolthiazin, zuzusetzen.

Das Reaktionsprodukt besteht im wesentlichen aus einem Gemisch von Vinylphosphonsäuredi- und monoalkylester, Vinylphosphonsäure, Vinylpyrophosphonsäuredi- und monoalkylester und Vinylpyrophosphonsäure. Die Anwesenheit weiterer Derivate der Vinylphosphonsäure, oligomerer Pyrophosphonsäuren, ist anzunehmen. Für die Praxis ist eine Isolierung der einzelnen Komponenten aus diesem Gemisch nicht erforderlich und man kann dieses Reaktionsgemisch daher direkt verwenden für die Herstellung von Produkten für die Flammhemmung. Will man aus dem erhaltenen Reaktionsgemisch die Einzelkomponenten in reiner Form isolieren, so neutralisiert man das Reaktionsgemisch zunächst in einem geeigneten Lösungsmittel mit Alkali und trennt die ausgefallenen Salze von den Di-estern ab. Die Alkalisalze der Phosphonsäuren bzw. Pyrophosphonsäuren lassen sich durch fraktionierte Kristallisation von den Salzen der Phosphonsäuremonoester bzw. Pyrophosphonsäuremonoester trennen.

## Beispiel 1

150 g 2-Chloräthanphosphonsäuredimethylester werden unter Rühren auf 195 °C erhitzt. Im Verlauf von 6 Stunden sammelt sich in einer der Apparatur nachgeschalteten Kühlfalle 44 g Methylchlorid (100 % d. Th.). Es wird 2 Stunden und 30 Minuten bei der Reaktionstemperatur nachgerührt. In der nachgeschalteten Kühlfalle sammeln sich erneut 3 g niedrig siedende Produkte, im wesentlichen Dimethyläther.

Es verbleiben 103 g eines Reaktionsproduktes, das aus 9 % Vinylphosphonsäuredimethylester, 32 % Vinylphosphonsäuremonomethylester, 10 % Vinylphosphonsäure, 1 % Vinylpyrophosphonsäuredimethylester, 10 % Vinylpyrophosphonsäuremonomethylester und 12 % Vinylpyrophosphonsäure besteht, bezogen auf die Gesamtmenge der Phosphorsignale im $^{31}$P-NMR-Spektrum.

Beispiel 2.

120 g 2-Chloräthanphosphonsäuredimethylester werden mit 1,2 g Phosphorsäuretrisdimethylamid vermischt und unter Rühren auf 170 °C erhitzt. Nach 10 Stunden und 30 Minuten haben sich in einer nachgeschalteten Kühlfalle 35,5 g Methylchlorid (100 % d. Th.) gesammelt. Es verbleiben 83 g eines Reaktionsproduktes, das 9 % Vinylphosphonsäuredimethylester, 33 % Vinylphosphonsäuremonomethylester, 13 % Vinylphosphonsäure, 6 % Vinylpyrophosphonsäuremonomethylester und 8 % Vinylpyrophosphonsäure enthält, bezogen auf die Gesamtmenge der Phosphorsignale im $^{31}$P-NMR-Spektrum.

Beispiel 3

120 g 2-Chloräthanphosphonsäuredimethylester und 6 g Vinylphosphonsäure werden vermischt und auf 175-180 °C unter Rühren erhitzt. Nach 14 Stunden haben sich in einer nachgeschalteten Kühlfalle 35,5 g Methylchlorid (100 % d. Th.) gesammelt. Es verbleiben 87 g eines Reaktionsproduktes, das 7 % Vinylphosphonsäuredimethylester, 31 % Vinylphosphonsäuremonomethylester, 11 % Vinylphosphonsäure, ca. 1 % Vinylpyrophosphonsäuredimethylester, 7 % Vinylpyrophosphonsäuremonomethylester und 9 % Vinylpyrophosphonsäure enthält, bezogen auf die Gesamtmenge der Phosphorsignale im $^{31}$P-NMR-Spektrum.

Beispiel 4

120 g 2-Chloräthanphosphonsäuredimethylester und 1 % Polyphosphorsäure werden vermischt und auf 180-185 °C unter Rühren erhitzt. Nach 14 Stunden haben sich in einer nachgeschalteten Kühlfalle 37 g niedrig siedende Produkte gesammelt. Es verbleiben 84 g eines Reaktionsgemisches, das 8 % Vinylphosphonsäuredimethylester, 30 % Vinylphosphonsäuremonomethylester, 10 % Vinylphosphonsäure, ca 1 % Vinylpyrophosphonsäuredimethylester, 8 % Vinylpyrophosphonsäuremonomethylester und 12 % Vinylpyrophosphonsäure enthält, bezogen auf die Gesamtmenge der Phosphorsignale im $^{31}$P-NMR-Spektrum.

Beispiel 5

120 g 2-Chloräthanphosphonsäuredimethylester werden auf 198 °C unter Rühren erhitzt. Nach einer Stunde haben sich in einer nachgeschalteten Kühlfalle 9 g Methylchlorid gesammelt. Nun wird die Temperatur auf 170 °C herabgesetzt und bei dieser Temperatur 19 Stunden gehalten. Anschließend wird noch 2 Stunden bei 190 °C erhitzt. Insgesamt erhält man noch 26,5 g niedrig siedende Produkte, die sich in der Kühlfalle kondensieren. Man erhält 82 g eines Reaktionsgemisches, das 7 % Vinylphosphonsäuredimethylester, 28 % Vinylphosphonsäuremonomethylester, 13 % Vinylphosphonsäure, 9 % Vinylpyrophosphonsäuremonomethylester und 14 % Vinylpyrophosphonsäure enthält, bezogen auf die Gesamtmenge der Phosphorsignale im $^{31}$P-NMR-Spektrum.

Beispiel 6

120 g 2-Chloräthanphosphonsäurediäthylester werden auf 190-205 °C unter Rühren erhitzt. Nach 7 Stunden und 30 Minuten haben sich in einer Apparatur nachgeschalteten Kühlfalle 38,5 g Äthylchlorid (ca. 100 % d. Th.) kondensiert. Anschließend wird 30 Minuten bei 190-195 °C nachgerührt. In der Kühlfalle sammeln sich dabei erneut 0,5 g niedrig siedende Produkte. Man erhält 79 g eines Reaktionsgemisches, das 8 % Vinylphosphonsäurediäthylester, 35 % Vinylphosphonsäuremonoäthylester, 15 % Vinylphosphonsäure, 7 % Vinylpyrophosphonsäuremonoäthylester und 10 % Vinylpyrophosphonsäure enthält, bezogen auf die Gesamtmenge der Phosphorsignale im $^{31}$P-NMR-Spektrum.

**Ansprüche**

1. Verfahren zur Herstellung von Vinylphosphonsäurederivaten der allgemeinen Formel

$$R_1O(-\underset{CH=CH_2}{\underset{|}{\overset{\overset{O}{\|}}{P}}}-O-)_nR_1,$$

worin $R_1$ Wasserstoff oder Alkylgruppen mit 1 bis 4, bevorzugt 1 bis 2 Kohlenstoffatomen bedeutet und n 1 oder 2 ist, dadurch gekennzeichnet, daß man 2-Halogenäthanphosphonsäuredialkylester der allgemeinen Formel

$$XCH_2CH_2\overset{O}{\overset{\|}{P}}(OR_2)_2,$$

worin X Chlor oder Brom bedeutet und $R_2$ Alkylgruppen mit 1 bis 4, bevorzugt 1 bis 2 Kohlenstoffatomen bedeutet, auf 150-220 °C, vorzugsweise 170-220 °C erhitzt.

2. Verfahren nach Anspruch 1, dadurch gekennzeichnet, daß man in Gegenwart saurer Katalysatoren im Temperaturbereich 170-220 °C arbeitet.

3. Verfahren nach Anspruch 1, dadurch gekennzeichnet, daß man in Gegenwart von tertiären aliphatischen oder aromatischen Aminen und Phosphinen, quartären Ammoniumsalzen bzw. Phosphoniumsalzen mit 3 bis 18 Kohlenstoffatomen, aromatischen heterocyclischen Verbindungen, Säureamiden, Stickstoff- oder Phosphorverbindungen mit einer Wertigkeit des N- bzw. P-Atoms höher als 3 oder Amiden der phosphinigen und phosphorigen Säure und der Phosphin- und Phosphonsäuren sowie ihrer Thioanaloga als basischen Katalysatoren arbeitet.

**Claims**

1. Process for the preparation of vinylphosphonic acid derivatives of the general formula

$$R_1O(-\underset{CH=CH_2}{\underset{|}{\overset{O}{\overset{\|}{P}}}}-O-)_nR_1,$$

wherein $R_1$ is hydrogen or alkyl with 1 to 4, preferably 1 to 2 carbon atoms and n is 1 or 2, which is characterized by heating 2-haloethanephosphonic acid dialkylester of the general formula

$$XCH_2CH_2\overset{O}{\overset{\|}{P}}(OR_2)_2,$$

wherein X is chlorine or bromine and $R_2$ is alkyl with 1 to 4, preferably with 1 to 2 carbon atoms at 150 to 220 °C, preferably 170 to 220 °C.

2. Process according to claim 1 which is characterized by working in the presence of acidic catalysts at a temperature of from 170 to 220 °C.

3. Process according to claim 1 which is characterized by working in the presence of tertiary aliphatic or aromatic amines or phosphines, quaternary ammonium or phosphonium salts with 3 to 18 carbon atoms, aromatic heterocyclic compounds, acid amides, nitrogen- or phosphorus compounds having a valency of more than 3 of the N and P-atoms, or amides of phosphinous-, phosphorous-, phosphinic- or phosphonic acid as well as their thio-analoga as basic catalysts.

**Revendications**

1. Procédé de préparation de dérivés de l'acide vinylphosphonique répondant à la formule générale

$$R_1O(-\underset{CH=CH_2}{\underset{|}{\overset{O}{\overset{\|}{P}}}}-O-)_nR_1,$$

dans laquelle $R_1$ représente l'hydrogène ou un radical alkyle contenant de 1 à 4 atomes de carbone, de préférence 1 ou 2, et n est égal à 1 ou à 2, procédé caractérisé en ce qu'on chauffe des halogéno-2 éthane-phosphonates de dialkyles répondant à la formule générale

$$XCH_2CH_2\overset{O}{\overset{\|}{P}}(OR_2)_2,$$

dans laquelle X représente le chlore ou le brome et $R_2$ un radical alkyle contenant de 1 à 4 atomes de carbone, de préférence 1 ou 2, à une température de 150 à 220 °C, de préférence de 170 à 220 °C.

2. Procédé selon la revendication 1, caractérisé en ce qu'on opère en présence de catalyseurs acides, dans un intervalle de température allant de 170 à 220 °C.

3. Procédé selon la revendication 1, caractérisé en ce qu'on opère en présence, comme catalyseurs basiques, d'amines ou de phosphines aliphatiques ou aromatiques tertiaires, de sels d'ammoniums ou de phosphoniums quaternaires contenant de 3 à 18 atomes de carbone, de composés aromatiques hétérocycliques, d'amides, de composés azotés ou phosphorés dont l'atome d'azote ou de phosphore a une valence supérieure à 3, ou d'amides d'acides phosphineux, de l'acide phosphorique, d'acides phosphiniques ou d'acides phosphoniques, ou de leurs analogues sulfurés.